# EUROPÄISCHE PATENTSCHRIFT

(11) **EP 2 399 097 B1**
(45) Veröffentlichungstag und Bekanntmachung des Hinweises auf die Patenterteilung: **11.06.2014**
(21) Anmeldenummer: 10709685.1
(22) Anmeldetag: 19.02.2010
(51) Int. Cl.: G01B 11/24, B24B 17/04, G01M 11/02

(54) **VERFAHREN ZUM BERÜHRUNGSLOSEN MESSEN DER TOPOGRAFIE**
METHOD FOR ZERO-CONTACT MEASUREMENT OF TOPOGRAPHY
PROCÉDÉ PERMETTANT UNE MESURE SANS CONTACT DE LA TOPOGRAPHIE

(30) Priorität: 21.02.2009 DE 102009010019
(43) Veröffentlichungstag der Anmeldung: 28.12.2011
(73) Patentinhaber: Luphos GmbH, 55130 Mainz (DE)
(72) Erfinder: Tschudi, Theo, 64293 Darmstadt (DE); Braunecker, Bernhard, 9445 Rebstein (CH)
(74) Vertreter: Dennemeyer & Associates S.A.
(86) Internationale Anmeldenummer: PCT/EP2010/001060
(87) Internationale Veröffentlichungsnummer: WO 2010/094498

(56) Entgegenhaltungen:
- EP-A2- 0 561 178
- GB-A- 1 378 515
- JP-A- 11 257 929
- US-A1- 2003 169 430
- US-A1- 2007 236 701

## Beschreibung

Die Erfindung betrifft ein Verfahren zum berührungslosen Messen der Topographie einer sphärisch oder asphärisch gekrümmten Luft-Glas-Oberflächen einer optischen Linse oder Linsenkombination und eine dazu geeignete Vorrichtung.

Optische Präzisionssysteme verwenden neben sphärischen Linsen vermehrt auch Elemente mit asphärischen Oberflächen. Während Kugelflächen charakterisiert sind durch einen konstanten Wert des Krümmungsradius über die gesamte optisch wirksame Oberfläche, weicht bei Asphären der lokale Krümmungsvektor sowohl in der Richtung, als auch in der Größe vom Vergleichsvektor einer Sphäre ab. Wie diese Abweichung variiert, hängt von der Anwendung der Asphäre ab: Beim Einsatz in rotationssymmetrischen Abbildungsobjektiven ist meist eine radiale Abhängigkeit der Oberflächenfunktion relativ zur optischen Achse genügend, während z.B. Scanningsysteme oft "Freiformflächen" erfordern, bei denen die Krümmungsvektoren in Größe und Richtung an jedem Oberflächenpunkt sich voneinander unterscheiden.

Bislang waren Asphären für Hochqualitätssysteme ca. 10x teurer als Sphären vergleichbarer Größe und Oberflächengenauigkeit, so daß ihr Einsatz nur in Ausnahmefällen in Frage kam. Der Kostenunterschied ist erklärbar, da im Gegensatz zu Asphären sphärische Oberflächen mit großflächigen Werkzeugen poliert werden können, wobei unkontrollierte Tangentialbewegungen der Werkzeugführung weitgehend irrelevant, oft sogar erwünscht, für den Polierprozeß sind. Deshalb kann man auch mit relativ einfacher Maschinenkinematik noch gute Genauigkeiten der Oberflächenform und -passen erreichen. Zudem ist der Werkzeugverschleiß wegen der großflächigen Applizierung gering.

Das ist völlig anders bei Asphären, wo wegen der erwähnten Ortsabhängigkeit des Krümmungsvektors nicht nur kleinflächig geführte Polierbewegungen erforderlich sind, sondern auch sehr präzise Meßmethoden, um die nötige Genauigkeit der Maschinenführung zu gewährleisten. Zudem verschleißen die Werkzeuge in weit höherem Masse durch die lokalen Korrekturbewegungen als bei der Sphärenherstellung. All diese kostentreibenden Faktoren verhinderten bislang den breiten Einsatz von Asphären in Optiksystemen kleinerer bis mittlerer Stückzahl, da die erzielbaren optischen Vorteile nicht die hohen Aufwandskosten rechtfertigten.

Das änderte sich erst, als in Massenkonsumprodukten wie Handykameras die Vorzüge von Asphären, die über Präge- oder Replikaverfahren sehr kostengünstig gefertigt werden können, zu offensichtlich wurden. Dies stimulierte dann auch die europäisch geprägten Produktionsmethoden für Hochleistungsoptiken. Man ist sich in Fachkreisen mittlerweile weitgehend einig, daß sich der Einsatz von Asphären wirtschaftlich rechtfertigen läßt, wenn der erwähnte Kostenfaktor von gegenwärtig 10 auf ca. 3 reduziert werden kann. Um dies zu erreichen, sind die gängigen Fertigungsmethoden auf ihre kostentreibenden Schwachstellen zu hinterfragen und Verbesserungsansätze zu finden.

Umfragen unter führenden Asphärenherstellern ergaben, dass neben der reproduzierbar, präzisen Maschinenkinematik und deren computergesteuerte Kontrolle vor allem dem Messprozess der aktuellen Oberflächenform und Oberflächenpasse entscheidende Bedeutung zukommt. Es besteht kein Zweifel, dass der Messvorgang simultan auf das vom Polierwerkzeug bearbeitete Oberflächenstück zugreifen muss, um die aktuelle Flächenverformung und den Polierzustand zu erfassen, und um damit den eigentlichen Polierprozess zu steuern. Das bedeutet jedoch eine vollständige Integration des Mess- in den Bearbeitungsablauf (In-line Metrology). Würde er zu einem späteren Zeitpunkt oder nicht genau am momentanen Bearbeitungsort erfolgen, würden wichtige lokale Bearbeitungsparameter wie z.B. Temperaturschwankungen ebenso wie lokale mechanische Verformungen oder Spannungen im Glaskörper nicht erfasst werden. Gerade die Kenntnis dieser meist a-priori nicht erfaßbaren Parameter entscheidet, ob der angestrebte Polierzustand mit Toleranzen im nm Bereich eingehalten werden kann.

Diesen Forderungen stehen jedoch zwei Probleme gegenüber: zum einen kann die Messanordnung nicht auf die momentan bearbeitete Oberflächenstelle zugreifen, da diese durch das Polierwerkzeug bedeckt ist. Zum anderen ist eine präzise Formerfassung generell kritisch, da die Stelle durch das Poliermedium, eine trübe Suspension mineralischer Teilchen, kontaminiert ist. In der Praxis muss man daher den Zwischenschritt einer Oberflächenreinigung einführen. Das nimmt unnötig Zeit, lässt die Probe unkontrolliert abkühlen und ist generell nur einschränkend erfolgreich, da eine adäquate Reinigung bei Präzisionen im nm Bereich ein Entfernen der Linse aus dem Bearbeitungszentrum erfordern würde. Dann verlöre man aber das Referenzkoordinatensystem für den Polierprozess, dessen Wiederherstellung nach erfolgter Reinigung erfahrungsgemäss sehr kostenaufwendig ist. Zudem kann die mechanisch-chemische Reinigung durch Ätzvorgänge die Oberfläche unkontrolliert verändern. Das gleiche gilt für das prinzipiell stets aggressive Reinigen mit Ultraschall.

Für die berührungslose Bestimmung der Topographie eines sphärisch oder asphärisch gekrümmten optischen Elementes besteht insbesondere bei der Herstellung von hochpräzisen Linsen ein großer Bedarf. Für bereits bestehende und zukünftige Optiksysteme werden immer höhere Anforderungen an deren Präzision gestellt. Es wird erforderlich, die Topographie der Oberflächen mit Subnanometergenauigkeit zu bestimmen.

Dazu werden beispielsweise die folgenden Meßverfahren eingesetzt:
a) Flächenhafte interferometrische Prüfverfahren: Diese sind zur Qualitätsbeurteilung optischer Bauteile prädestiniert. Die Prüfung von asphärischen optischen Flächen oder Systemen erfordert jedoch fast immer spezielle Nullkompensatoren. Für diese Aufgabe werden häufig computergenerierte Hologramme (CGHs) eingesetzt. Sie zeichnen sich dadurch aus, daß mit einer einzigen diffraktiv wirkenden Funktionsfläche eine einfallende Wellenfront nahezu beliebig manipuliert werden kann. Für die Herstellung und Prüfung insbesondere von Kleinserien von Linsen sind diese Methoden jedoch nicht besonders geeignet, da zur Zeit die Herstellung von CGH's noch teuer ist und die CGH's für jeden Linsentyp neu berechnet werden muß. Zudem ist es extrem aufwendig, die Meßgenauigkeit in den Subnanometerbereich zu legen.
b) In EP 0 395 831 A1 ist die Vermessung von gekrümmtem Oberflächen, insbesondere der Hornhaut eines menschlichen Auges, beschreiben. Das Meßprinzip beruht auf der Erzeugung eines vorgegebenen Musters mit Hilfe von mehreren Lichtquellen, deren Lichtstrahlen an der zu untersuchenden Oberfläche reflektiert werden. Unregelmäßige Krümmungen der Oberfläche führen zu Verzerrungen des vorgegebenen Musters. Das durch die mehreren Lichtquellen erzeugte Muster begrenzt die Auswertegenauigkeit dieses Verfahrens.
c) In EP 0 561 178 A2 wird ein Verfahren beschrieben, bei dem die Bestimmung der lokalen Krümmung der Oberfläche am Meßpunkt durch die Detektion der Position des von dem Meßpunkt reflektierten Strahls vorgenommen wird (Triangulation). Hier wird also nur das 1. Moment, die Neigung der erfaßten Fläche gemessen. Auch dieses Verfahren erlaubt beispielsweise nicht die Vermessung einer Oberfläche mit einer Genauigkeit im Nanometer- oder sogar Subnanometerbereich.
d) Die Erfindung in DE 198 54 942 C2 betrifft ein Verfahren zum berührungslosen optischen Messen der Topographie von makroskopisch glatten Oberflächen von sphärisch oder asphärisch gekrümmten Probekörpern, bei dem die zu messende Oberfläche mit einer gegenüber der Ausdehnung der Oberfläche sehr kleinen Apertur abgetastet wird und für jeden Meßpunkt durch den Meßstrahl eine lokale Krümmung der Oberfläche am Meßpunkt bestimmt wird. Dabei muß der Meßstrahl im Wesentlichen senkrecht zur Oberfläche ausgerichtet sein, so daß am Meßpunkt jeweils ein Interferogramm aus einem kohärenten auftreffenden Strahl und von der Oberfläche reflektierten Meßstrahl gebildet wird, und daß die Bestimmung der Krümmung aus dem Interferogramm durch Vergleich des gemessenen ausgewerteten oder unausgewerteten Interferogramms mit Daten einer in ihren Parametern zur Anpassung variierten, analytischen, dreidimensional gekrümmten Oberfläche vorgenommen wird. Die Bestimmung der Oberflächentopographie erfolgt dann durch eine rechnerische Auswertung aus den über die gesamte Oberfläche bestimmten Krümmungswerten, beispielsweise durch zweimalige Integration. Diese Integration wird vorzugsweise gemäß einer üblichen Auswertungsmethode mit Fouriertransformierten im Frequenzraum ausgeführt. Eine solche Auswertung ist aufwändig, und es können sich durch die Aufsummierung leicht Meßfehler einschleichen.
e) Eine andere Schrift US 2007/236701 A1 beschreibt das berührungslose Messen der Topographie von Linsen, wobei beispielsweise als optisches Messsystem ein Weißlichtinterferometer verwendet wird, welches die Oberfläche beider Linsenseiten und deren Abstand aus einer Richtung vermisst. Das Messsystem ist dabei so beweglich gelagert, dass alle Punkte auf der Linseoberfläche durch den Lichtstrahl abgetastet werden können.
f) In einer weiteren Schrift US 2003/169430 A1 wird die Linsenform aus der Interferenz zwischen beiden Linsen-oberflächen oder einer Linsenoberfläche und einer Referenzfläche ermittelt.
g) In der GB 1 378 515 A wird die Zentrierung von Linsenoberflächen gemessen, wobei die Linse auf der Stirnfläche einer Welle angebracht ist. Das optische Messsystem zeigt dabei zur Stirnfläche hin.
h) Die japanische Schrift JP 11 257929 A beschreibt die sequenzielle Kombination von Polieren und Vermessen einer Linse.

Diese Meßverfahren erlauben beispielsweise nicht die Vermessung einer Oberfläche mit einer Genauigkeit im Nanometer- oder sogar Subnanometerbereich, wenn das Werkstück in einer Bearbeitungsmaschine eingespannt ist. Die Oberfläche bedarf einer sehr sorgfältigen Reinigung, damit verbleibende Schleif- und Poliermittel keine Oberflächenfehler vortäuschen.

Um eine höhere Reproduzierbarkeit und Genauigkeit der Topographiemessung zu erreichen, ist es notwendig, den Meßprozeß an der Oberfläche bei fest eingespanntem Probekörper auf der Herstellungsmaschine (Schleif- oder Poliermaschine) vorzunehmen. In diesem Fall ist eine Messung von der Bearbeitungsseite her nur möglich, wenn die zu vermessende Oberfläche frei von Schleif- und Poliermittel ist. Zudem kann der mechanische Aufbau der Bearbeitungsmaschine es verhindern, daß eine Meßapparatur den gesamten zu vermessenden Oberflächenbereich abtasten kann. Insbesondere sind die heutigen Schleif- und Poliermaschinen mit komplexen Werkzeugköpfen versehen. Diese Bedingungen erschweren eine rasche und genaue Topographievermessung.

### Aufgabe:

Der vorliegenden Erfindung liegt daher die Problemstellung zu Grunde, ein Meßverfahren für die Bestimmung der Topographie von beliebig gekrümmten Oberflächen anzugeben, das eine hohe Genauigkeit und Reproduzierbarkeit der Messung ermöglicht und insbesondere im eingespannten Zustand der Linsen oder Linsenkombination auf der Schleif- und Poliermaschine anwendbar ist.

Diese Aufgabe wird bei einem Verfahren der eingangs genannten Art erfindungsgemäß durch die kennzeichnenden Merkmale des Anspruchs 1 gelöst. Vorteilhafte Weiterbildungen ergeben sich aus den Merkmalen der abhängigen Ansprüche 2 bis 6. Eine zur Durchführung des Verfahrens geeignete Vorrichtung ergibt sich aus den kennzeichnenden Merkmalen des Anspruchs 7. Vorteilhafte Weiterbildungen dazu ergeben sich aus den Merkmalen der abhängigen Ansprüche 8 und 9.

Der konzeptuelle Lösungsansatz der Erfindung besteht darin, daß man den Zugriffkonflikt von Bearbeitungswerkzeug und Meßgerät dadurch löst, daß, da das Oberflächensegment von der Luft-Glasseite her poliert wird, man es simultan von der anderen Seite, der Glas-Luftseite, vermißt. Damit löst man auch das Problem der Kontaminierung, da die Formerfassung der Glasoberfläche nicht zweimal durch das Poliermedium erfolgen muß.

Bei der erfindungsgemäßen Messung wird der Meßstrahl von der Rückseite her durch eine zum Beispiel bereits bearbeitete, polierte Oberfläche hindurchgeführt.

Um die Nachteile der in den oben genannten, bekannten Beispielen zu umgehen, wird in der vorliegenden Erfindung zudem ein Mehrwellenlängen - Interferometer zur Abstandsbestimmung eingesetzt, das den Abstand der angefahrenen Meßpunkte auf der Oberfläche bis zur fixierten Vorderfläche des optischen Meßkopfes mißt. Damit bekommt man für jeden Punkt auf der zu prüfenden Oberfläche einen absolut im Raume stehenden Koordinatenwert und muß somit keine Integrationsprozesse durchführen.

Die Meßgenauigkeit ist dabei durch die Auflösung des Interferometers bestimmt, die bis in den Subnanometerbereich möglich ist.

Wie die Oberflächenfunktion prozeßgerecht physikalisch und technisch "on-line" erfaßt werden kann, ist ein weiterer Teil der Erfindung. Im Folgenden werden drei Varianten beschrieben, die das Oberflächenprofil der Asphäre physikalisch erfassen:
a) Lidar (Referenzbeispiel):
   Als erstes wird erwogen, mit einem kohärenten Laser Ranger oder äquivalent einer interferometrischen Phasenmeßmethode die Prüffläche abzufahren und eine hoch präzise Distanzmessung zwischen der Prüffläche und einer geeigneten Vergleichsfläche im Sende/Empfangsmodul, bzw. im Interferometer durchzuführen. Dabei wird das Höhenprofil der Prüffläche gemittelt über den beleuchtenden Strahldurchmesser erfasst.
b) Wellenfrontsensor (Referenzbeispiel):
   Eine alternative, aber ebenfalls praxisgerechte Methode ist, das vom beleuchtenden Laserstrahl erfasste Flächensegment auf einen Wellenfrontsensor (WFS) abzubilden. Dieser bestimmt dann aus der Neigung der reflektierten Wellenfront die mittlere geometrische Neigung der Oberfläche des Subsegments, ebenfalls relativ zu einer Referenzfläche.
c) Sensorfusion (Referenzbeispiel):
   In der Praxis bewährt hat sich auch eine Kombination beider Verfahren, bei der das vom Laserbündel erfasste Oberflächensegment zum einen auf einen WFS abgebildet wird, gleichzeitig zum anderen aber auch der mittlere Abstand gemessen wird. Die Erfahrung zeigt, dass dies zu einer wesentlichen Genauigkeitssteigerung und zu einer schnelleren Konvergenz der Auswertealgorithmik führt, aber auch, dass die Robustheit der algorithmischen Methode erhöht wird, nicht in falsche Nebenmaxima bei der Optimierung zu geraten. Denn der eigentliche Messprozess ist immer überlagert von stochastischen Störungen, bedingt durch Taumelbewegungen der Achsspindel, "Stick and slip"-Bewegungen des Polierwerkzeuges, aber auch durch Jitterbewegungen der Scanner, die den Laserstrahl über die Prüffläche führen.

Die Beschreibung einer Asphäre durch den kontinuierlichen Verlauf ihres Krümmungsvektors ist zwar mathematisch korrekt, muss aber für den Fertigungsprozess noch geeignet diskretisiert werden. Wichtig ist dabei zu wissen, auf welchem 2D-Oberflächenraster die Krümmung bekannt sein muss, um den momentanen Bearbeitungszustand eindeutig zu charakterisieren und in den nächsten zu überführen. Das nötige Raster kann sich dabei durchaus ändern im Laufe des Bearbeitungsvorgangs. Eine zerklüftete oder aus der Vorgabe abgedriftete Oberflächenform muss enger abgetastet werden als eine auspolierte Fläche kurz vor Erreichen der Endspezifikation.

Bei allen drei oben genannten Methoden wird man aus Effizienzgründen immer bestrebt sein, mit einem Minimum an Messdaten auszukommen, also ein "Oversampling" zu vermeiden. Das adäquate "Sampling" hängt sowohl von der Oberflächentopographie des Prüflings ab, aber auch vom Eindeutigkeitsbereich des Sensors. Je grober man abtastet, um so mehr können Feinstrukturen der Oberflächendeformation verloren gehen, und um so eher kann der Meßbereich des Sensors übersteuert werden. Gerade im letzten Fall, wenn man wie bislang die gesamte Prüffläche auf einmal erfassen will, sind die Abweichungen der Prüffläche von der Referenzfläche oft größer als eine Wellenlänge. Man muß dann zu mathematischen Methoden greifen, die Mehrdeutigkeit der interferometrischen Signale zu lösen, was aufwendig ist, oder man ist dann auf die Verwendung sogenannter "Nulloptiken", Computerhologramme oder Kompensatoren angewiesen. Da diese teuer sind, für jede Applikationen speziell angefertigt werden müssen, und auch ihr mechanischer Einbau in den optischen Prüfaufbau neue Fehler einführen kann, ist ein sequentielles Abtasten der Gesamtfläche praxisgerechter. Es wird also in allen drei Fällen vorgesehen, die Prüfoberfläche in Subsegmente zu unterteilen und diese gemäss den Methoden a), b), c) zu vermessen. Dazu muß in allen drei Fällen der beleuchtende Laserstrahl über die Prüffläche geführt werden. Da synchron zum Polierprozeß gemessen werden soll, der eine azimutale Drehung des Prüfkörpers um die Dornachse erfordert, ist der Laserscan nur in radialer Richtung, also eindimensional, durchzuführen.

Das 2D-Samplingraster in radialer und azimutaler Richtung wird dann unter Beachtung der Drehbewegung und der Geschwindigkeit des Radialscans über die Schußfrequenz des Lasers eingestellt. Über die Schußdauer und den Durchmesser des Laserbündels wird die Größe der Flächensegmente festgelegt. Dabei wird man bei stark strukturierten Oberflächen so abtasten, dass ein Überlappen der Flächensegmente erreicht wird, hingegen wird man ein mehr punktuelles Rastern vornehmen, wenn glatte Oberflächen vorliegen.

Neben den Mittelwerten der Distanz über das Flächensegment gemäss a) oder der Neigung in Methode b) oder beiden in c) sind je nach Sensor auch sogenannte höhere Deformationsmomente meßbar. Ein WFS kann durchaus Aussagen über Abweichung der reflektierten WF von der beleuchtenden Kugel- oder ebenen Welle erbringen, die sphärische, komatische oder astigmatische Aberrationen höherer Ordnung erkennen lassen. Ebenso kann man aus der Form des zeitlichen Returnsignals des Laser Rangers auf die Form des vom Strahldurchmesser illuminierten Oberflächensegmentes schliessen.

Beim "on-line" kontrollierten Polieren der asphärischen Form S1 einer Glaslinse geht man davon aus, dass ihre Gegenseite S2 bereits weitgehend in Toleranz poliert wurde. Man kennt somit ihre Oberflächentopographie, die z.B. mittels eines Werkstattinterferometers ausserhalb der Poliermaschine bestimmt wurde, und sie soll deshalb als Referenzfläche für den eigentlichen Poliervorgang der Asphäre S1 dienen. Dieses Vorgehen stellt keine Einschränkung der Allgemeinheit dar, denn selbst, wenn die Glaslinse beidseitig asphärisiert werden sollte, kann man mit einer Sphäre S1 beginnen, die Gegenseite S2 wie beschrieben asphärisieren und anschließend diese dann als Referenz für S1 benutzen. Nach erfolgter Montage des Prüflings auf den Polierdorn wird von der Prüfoptik stets sowohl die bereits bekannte Referenzfläche S2 direkt als auch die zu bearbeitende S1 durch S2 vermessen.

Das beidseitige Erfassen hat den Vorteil, daß man S1 immer referenziert zum einzig relevanten Koordinatensystem des Linsenkörpers, nämlich zu sich selbst. Damit wird man unabhängig von Achstaumelfehlern des Dorns, von noch zu beschreibenden Störungen der Scannerbewegung, und vor allem auch von unvermeidlichen Zentrierfehlern der Meßoptik, einer Zoom-Optik, bei der mehrere Baugruppen entlang der optischen Achse verschoben werden müssen.

Der eigentliche Ablauf wird so gestaltet, dass er im wesentlichen der Methode ähnelt, mit dem sphärische Linsen, Kittglieder oder sogar ganze Objektive in der Optikwerkstatt auf Zentrierfehler geprüft werden. Dabei fokussiert man den Meßlaser zuerst in den Krümmungsmittelpunkt der zur Zoom-Optik nächstgelegenen Fläche S2. Das an S2 reflektierte Strahlbündel wird dann ebenfalls dorthin retrofokussiert und durch die Zoom-Optik auf den Sensor abgebildet. Bei Verkippung von S2 liegt der Krümmungsmittelpunkt von S2 nicht auf der Drehachse des Dorns, und es wandert der Sensorpunkt auf dem Detektor kreisförmig synchron mit der Drehachse, wobei aus dem Kreisdurchmesser sich der Schlagfehler von S2 bestimmen läßt. Danach fokussiert man den Laser in den Krümmungsmittelpunkt von S1, allerdings gesehen durch S2, und wiederholt das Prozedere. Man bekommt eine Aussage über die Verkippung von S1, aber gesehen durch S2, und kann diese unter Berücksichtigung der ersten Messung zur Drehachse eindeutig bestimmen. Beim hier zu beschreibenden Asphärenprozeß ist der Vorgang ähnlich: Nachdem die Topographie von S2 interferometrisch vorvermessen wurde, wird ihre Lage relativ zur Dornachse gemäß dem beschriebenen Verfahren bestimmt. Danach fokussieren wir den Laser in den Krümmungsmittelpunkt (best fit) von S1, gesehen durch S2, und bestimmen den Flächenverkippwinkel. Da bei Asphären dieser wie erwähnt nicht konstant ist, sondern lokal variierend, reduzieren wir den geschilderten Prozeß auf Subsegmente. Aus Genauigkeitsgründen werten wir auch nicht das Wandern des Fokuspunktes aus, sondern bilden das Subsegment mit der Zoom-Optik auf einen WFS (Referenzbeispiel) ab. Durch die Einschränkung der Prüffläche auf ein Subsegment erreicht man, dass die lokale Verkippung im Meßbereich des WFS (Referenzbeispiel) liegt, man braucht also keine Nulloptik.

Zusammengefaßt betrifft die Erfindung ein Verfahren zum berührungslosen optischen Messen der Topographie der sphärisch oder asphärisch gekrümmten Oberfläche eines optischen Elementes durch Abtasten der Oberfläche mit einer systemdefinierten Referenzwellenfront oder mit einer gegenüber der Ausdehnung der Oberfläche kleineren Apertur und Bestimmen der lokalen Wellenfrontdeformation relativ zum Meßsystem. Dabei wird die abtastende Wellenfront so geführt, daß sie weitgehend senkrecht auf die Prüfoberfläche ausgerichtet ist. Die durch die Asphärenform bedingten Abweichungen werden mit einem in einem Sensorkopf befindlichen Interferometer oder WFS (Referenzbeispiel) erfaßt und ausgewertet. Dabei wird der Meßstrahl nicht wie allgemein bekannt von außen direkt auf die geschliffene oder polierte Luft-Glas-Oberfläche geschickt, sondern durch die Abbildungslinse hindurch durch ihre Rückseite. Dadurch wird erreicht, daß die Oberfläche auch im eingespannten Zustand in der Schleif- oder Poliermaschine vermessen werden kann. Dabei ist es beispielsweise erforderlich festzustellen, ob die Oberfläche frei von störenden Unebenheiten ist und ob die gewünschte Abweichung einer asphärischen Oberfläche von der jeweils zugrunde liegenden Asphärenform mit ausreichend enger Toleranz eingehalten ist.

Eine Vorrichtung zur Durchführung des erfindungsgemäßen Verfahrens ist in der Zeichnung schematisch dargestellt. Dabei zeigen:
- Fig. 1: den mechanischen Aufbau;
- Fig. 2: den prinzipiellen optischen Aufbau, so wie er beim Kugelfutterzentrieren benutzt wird;
- Fig. 3: das Abscannen der Prüfoberfläche S1 durch die radial geführte Bewegung des Meßkopfes, beinhaltend das Interferometer oder den Wellenfrontsensor (Referenzbeispiel);
- Fig. 4: das simultane Abscannen beider Oberflächen S1 und S2 mit zwei, im selben Meßkopf eingebauten Meßeinheiten; und
- Fig. 5: eine Variante mit eingeschränkter Genauigkeit, bei der die Messung auf die Oberfläche S2 nur dazu dient, eventuelle Achstaumelfehler zu erfassen.

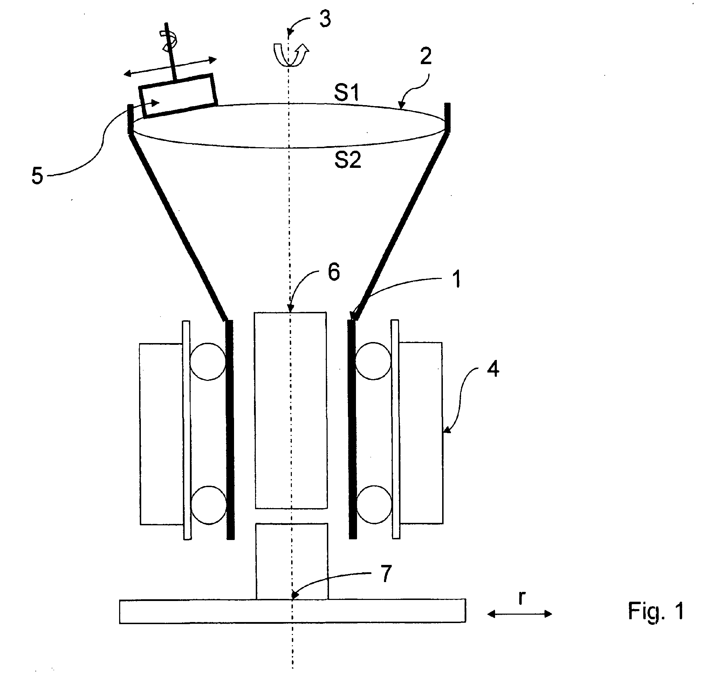

Die in Fig. 1 dargestellte mechanische Anordnung enthält eine Hohlwelle 1, die nach oben trichterförmig zur stirnseitigen Aufnahme einer Linse 2 oder eines Linsensystems aufgeweitet ist. Die Drehachse 3 der Hohlwelle 1 soll zumindest angenähert mit der optischen Achse der Linse 2 und der Zoom-Optik 6 zusammenfallen.

Die Hohlwelle 1 ist in einem nicht weiter dargestellten Aufnahmefutter 4 einer Schleif- oder Poliermaschine gelagert. Die Oberfläche S1 der Linse wird in üblicher Weise mit einem taumelnd über die Oberfläche S1 geführten Schleif- oder Polierkopf 5 bearbeitet.

In der Hohlwelle 1 ist eine Fokussieroptik 6 für ein Meßstrahlenbündel angeordnet, das von einer Meßeinheit 7 ausgeht. Die Meßeinheit 7 enthält neben einem System zur Erzeugung des Meßstrahlenbündels auch einen optischen Sensor zur Meßsignal-Erzeugung. Die Meßeinheit 7 ist in radialer Richtung 5, also senkrecht zur Drehachse 3 verschiebbar angeordnet.

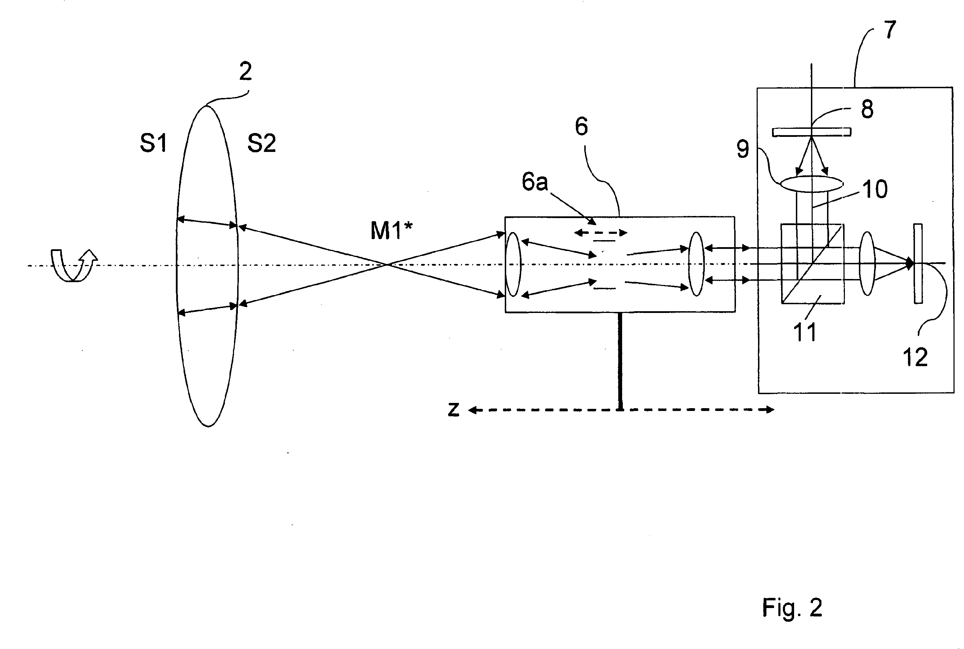

Fig. 2 zeigt den grundlegenden optischen Aufbau, so wie man ihn vom Kugelfutterzentrieren her kennt. Die Linse 2 ist so angeordnet und ausgerichtet, daß die Krümmungsmittelpunkte der Oberflächen S1 und S2 möglichst auf der Drehachse 3 liegen, d.h. die optische Achse der Linse 2 fluchtet mit der Drehachse 3.

Die Meßeinheit 7 enthält einen Laser 8, z.B. einen Pulslaser, dessen kohärente Strahlung über eine Kollimationslinse 9 in ein paralleles Meßstrahlenbündel 10 geformt wird. Das Meßstrahlenbündel 10 wird über einen Strahlenteiler 11 in die Fokussieroptik 6 gelenkt. Die Fokussieroptik 6 ist als Zoom-Optik mit einer verschiebbaren Linsengruppe 6a ausgebildet, die das Meßstrahlenbündel 10 in den Krümmungsmittelpunkt M1* der Linsen-Oberflächen S1, gesehen durch S2, fokussieren kann. Dabei hat das Zoom-Objektiv eine duale Aufgabe zu erfüllen: es muß den Krümmungsmittelpunkt M1* auf den Detektor 12 und gleichzeitig die Oberfläche S1 in die Austrittspupille der Zoom-Optik abbilden. Diese liegt bei telezentrischer Zoom-Optik im Unendlichen. Deshalb hat sich in der Praxis als notwendig erwiesen, daß die Zoom-Optik selber auch in z-Richtung, also entlang der optischen Achse, verschiebbar sein muß, um für verschiedene Asphärenlinsen beide Abbildungskriterien zu erfüllen.

Das an der Glasrückfläche der Oberfläche S1 retroreflektierte Meßstrahlenbündel 10 wird durch die Zoom-Optik wieder als kollimiertes Strahlenbündel auf den Strahlenteiler 11 geführt und durch die Strahlenteilerfläche hindurch auf den Sensor 12 abgebildet, der in Fig. 2 als Flächensensor gezeichnet ist.

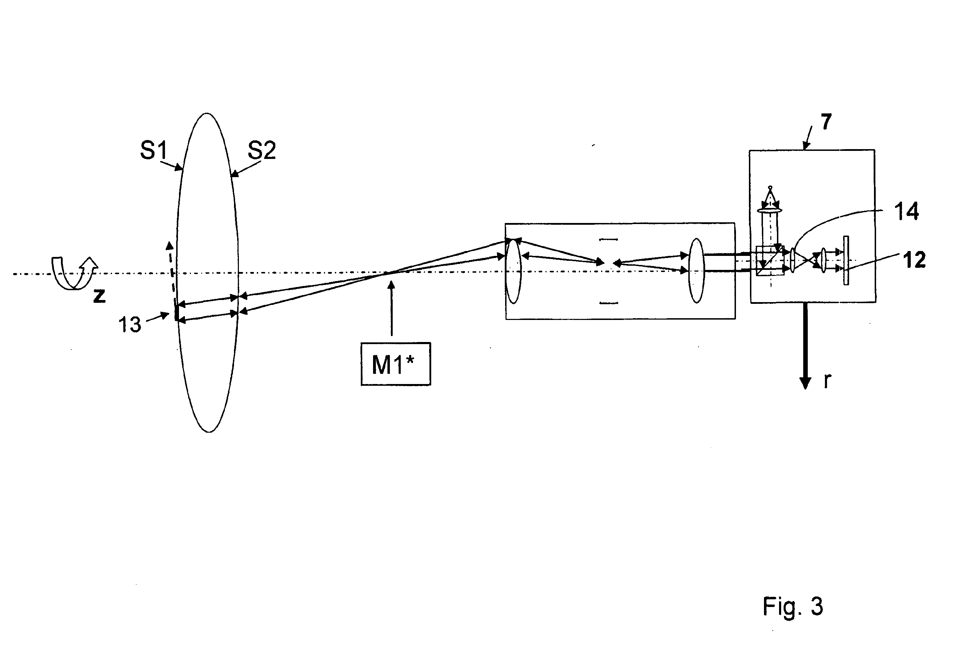

Fig. 3 zeigt den radialen Pupillenscan, bei dem die Meßeinheit 7 als Einheit senkrecht zur Drehachse 3 in radialer Richtung r verschiebbar ist. Das Meßstrahlenbündel 10 hat nunmehr einen kleinen Durchmesser, so daß es auf der Prüfoberfläche S1 nur ein kleines Flächensegment 13 beleuchtet. Bedingt durch die radiale Verschiebung des Meßbündels tritt diese unter einem wechselnden Winkel aus der Fokussieroptik 6 aus, so daß unterschiedliche Oberflächensegmente 13 auf S1 bestrahlt werden. Die Verschiebung der Vorrichtung 7 wird so gesteuert, daß das Meßstrahlenbündel 10 über den gesamten Durchmesser der Oberflächen S1 geführt wird. Dabei dient der Fokuspunkt M1* als optischer Hebelpunkt, da alle gescannten Bündel durch ihn hindurchgehen. In Fig. 3 ist der bisherige Flächensensor 12 nun durch ein Mehrwellenlängen-Interferometer oder einen Wellenfrontsensor (Referenzbeispiel) ersetzt. Dazu muss unter Umständen eine kleine Relaisoptik 14 eingebaut werden, um die Pupillenfläche 13 auf das Interferometer oder den WFS (Referenzbeispiel) korrekt abzubilden. Das Resultat der Interferometermessung ist ein sehr genau bestimmter Abstandswert vom Sensor zum jeweiligen Oberflächensegment 13, bzw. eine sehr genaue Bestimmung der lokalen Flächenneigung von 13 im Falle der Benutzung eines WFS (Referenzbeispiel) als Detektoreinheit 12.

Bei einer Drehung der Linse 2 um die Drehachse 3 wandert das beleuchtete Oberflächensegment 13 spiralartig über die Oberfläche S1. Je nach Drehgeschwindigkeit, Radialgeschwindigkeit und Laserschußfrequenz kann ein mehr oder weniger dichtes Netz von Meßpunkten an der Oberfläche S1 abgetastet werden.

### Meßvorgang:

Bei der angestrebten Genauigkeit der Bestimmung des Flächenprofils im Sub-Nanometerbereich sind all die Einwirkungen auf den Meßprozeß, die durch die unvermeidlichen Instabilitäten der verschiedenen mechanischen Bewegungen entstehen, zu eliminieren oder zu kompensieren. Den größten Einfluß hat das Polierwerkzeug, das senkrecht auf die Fläche S1 Druck ausübt, aber auch je nach Viskosität des Poliermittels zu sogenannten "stick and slip"-Effekten führt, also zu reibungsbedingten, stochastischen Bewegungen in azimutaler Richtung. All diese erratischen Einflüsse bedingen eine nicht kontrollierte Lagevariation der Linse 2, die größer sein kann als die angestrebte hochgenaue Bestimmung des Flächenprofils.

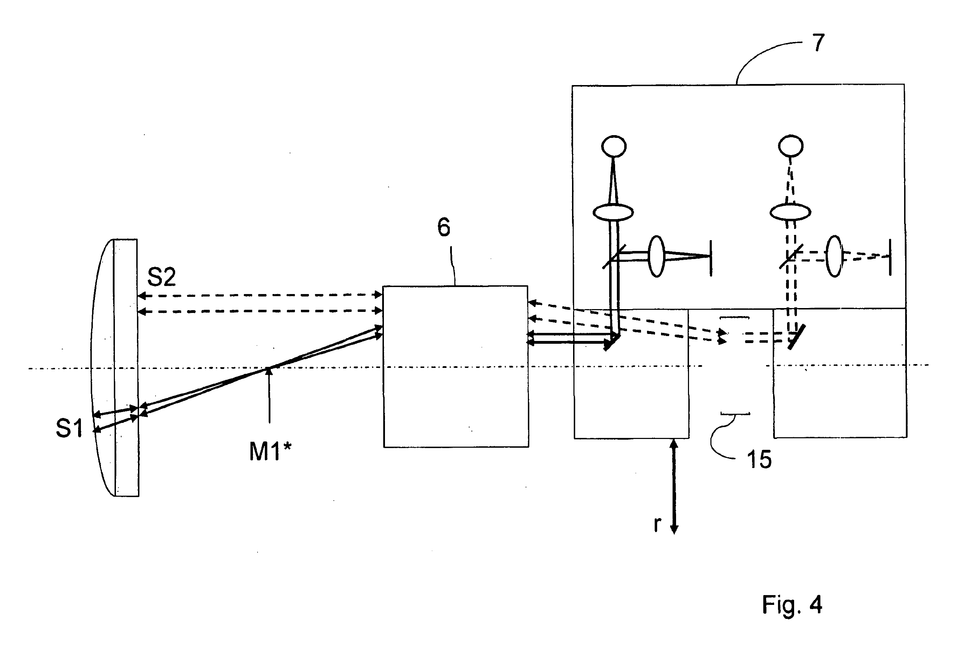

In Fig. 4 wird eine geeignete Lösungsvariante beschrieben:
Zur Bestimmung des asphärischen Flächenprofils der Oberfläche S1 relativ zur Oberfläche S2 wird das Meßstrahlenbündel 10 zunächst, wie bereits beschrieben, in den Krümmungsmittelpunkt M1* der Oberfläche S1, gesehen durch S2, fokussiert. Gleichzeitig wird ein zweites Laserbündel, bevorzugt mit anderer Wellenlänge, mittels einer Hilfslinse 15 so vorfokussiert in die Zoom-Optik 6 eingeführt, daß es im Krümmungsmittelpunkt von S2 fokussiert wird. In Fig. 4 ist der spezielle Fall gezeichnet, daß S2 eine Planfläche ist. Dann muß das zweite Bündel als Parallelstrahl auf S2 auftreffen. Beide Meßköpfe sind in derselben Meßeinheit 7 plaziert und werden deshalb simultan in radialer Richtung gescannt, unterliegen also denselben Richtungsschwankungen der Scanbewegung. Wenn man voraussetzt, daß die Topographie der Oberfläche S2 bereits aus interferometrischen Messungen in einem externen Vorprozeß bekannt ist, können aus den gemessenen Abstands- oder Flächenneigungswerten der Messung auf Fläche S2 die Kippfehler der Linsenaufnahme, der mechanische Einfluß des Polierwerkzeuges, der des Taumelfehlers der Hohlachse 1, sowie die Einflüsse der Scannerbewegung ermittelt werden. Diese Kenntnis erlaubt, die simultanen Messungen an S1 entsprechend zu korrigieren. Beide Messungen sind also wie erwünscht mechanisch zu einander korreliert, spiegeln also die dynamischen Systeminstabilitäten wider. Da sie aber aus zwei verschiedene Lichtquellen entstammen, ist eine die interferometrische Abstandsmessung störende Interferenz beider Bündel nicht gegeben.

Auf diese Weise ist die Messung unabhängig von mechanischen Fehlern der Anordnung und von Maschinentoleranzen.

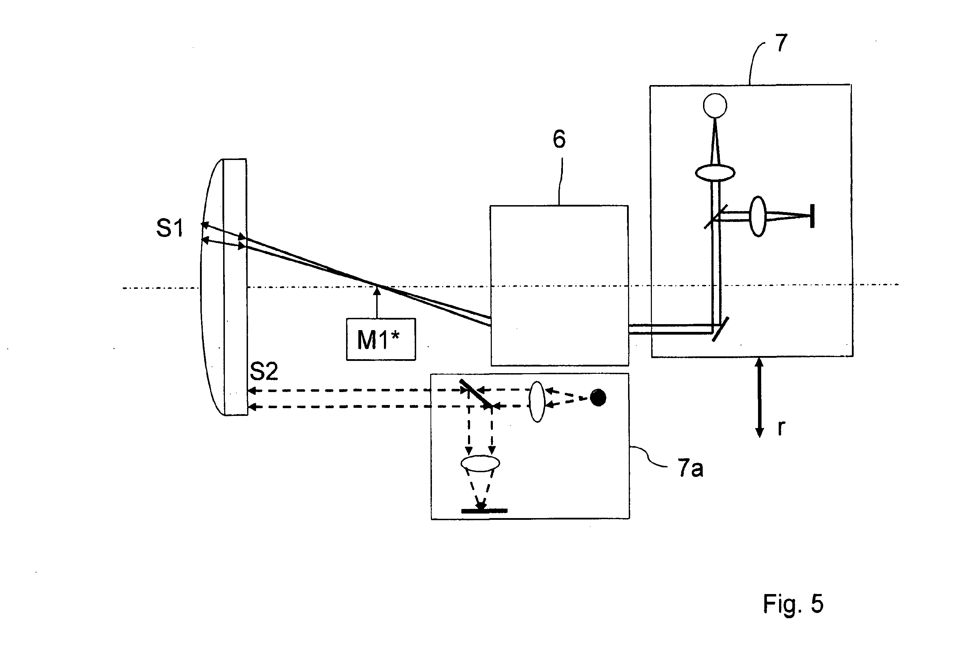

In Fig. 5 schließlich wird eine einfachere Variante gezeigt, bei der die Simultanmessung auf die als Referenzfläche dienende Oberfläche S2 nicht mitgescannt wird und auch nicht durch die Zoom-Optik geführt wird, sondern von einer stationär angebrachten Einheit 7a konstant eine Ringzone von S2 beleuchtet, also nur die Achstaumelfehler kontrolliert. Diese Variante ist technisch einfacher und somit kostengünstiger, erfaßt jedoch nicht die Unregelmäßigkeiten der Scannerbewegung. Deshalb kann sie nur bei reduzierten Genauigkeitsanforderungen an den Polierprozeß, sowie bei vernachlässigbaren Lagefehler der Scannermechanik praxisgerecht eingesetzt werden.

### Bezugszeichenliste

- 1: Hohlwelle
- 2: Linse
- 3: Drehachse
- 4: Aufnahmefutter
- 5: Schleif- / Polierkopf
- 6, 6a: Fokussieroptik
- 7: Meßeinheit
- 7a: stationäre Einheit
- 8: Laser
- 9: Kollimationslinse
- 10: Meßstrahlenbündel
- 11: Strahlenteiler
- 12: Interferometer / Wellenfrontsensor
- 13: Oberflächensegment / Meßpunkt
- 14: Relaisoptik für Interferometer und Wellenfrontsensor
- 15: Hilfslinse
- S1, S2: Oberflächen der Linse 2
- M1*: Ort des Krümmungsmittelpunktes von S1, gesehen durch S2

### Zitierte Literatur

Zitierte Patentliteratur:
EP 0 395 831 A1
EP 0 561 178 A2
DE 198 54 942 C2
US 2007/236701 A1
US 2003/169430 A1
GB 1 378 515 A
JP 11 257929 A

## Patentansprüche

1. Verfahren zum berührungslosen Messen der Topographie einer sphärisch oder asphärisch gekrümmten Luft-Glas-Oberfläche (S1) einer optischen Linse (2) oder eines optischen Linsensystems mit folgenden Schritten:
a) die optische Linse (2) oder das Linsensystem werden auf der Stirnseite einer drehbar gelagerten Hohlwelle (1) derart befestigt, daß die optische Achse der Linse (2) oder des Linsensystems zumindest annähernd mit der Drehachse (3) der Hohlwelle (1) fluchtet;
b) in der Hohlwelle (1) wird eine Fokussieroptik (6) für ein optisches Meßstrahlenbündel (10) angeordnet;
c) die zu vermessende Luft-Glas-Oberfläche (S1) wird durch eine in Meßrichtung davor liegende, weitere Luft-Glas-Oberfläche (S2) hindurch mit dem optischen Meßstrahlenbündel (10) abgetastet;
d) für jeden angefahrenen Meßpunkt auf der zu vermessenden Oberfläche wird mittels des Meßstrahlenbündels (10) ein Abstand zu einer fixierten Vorderfläche eines optischen Meßkopfes bestimmt,
e) wobei der Abstand mittels eines Mehrwellenlängen-Interferometers (12) bestimmt wird; und
f) die Abstandsbestimmung wird für die angefahrenen Meßpunkte der gesamten zu vermessenden Luft-Glas-Oberfläche sequentiell durchgeführt.

2. Verfahren nach dem vorhergehenden Anspruch,
wobei
simultan die der abgetasteten Luft-Glas-Oberfäche (S1) voran liegende, weitere Luft-Glas-Oberfläche (S2) mit einem vom Meßstrahlenbündel (10) unterscheidbaren optischen Referenz-Meßstrahlenbündel abgetastet wird.

3. Verfahren nach dem vorhergehenden Anspruch,
wobei
die beide Luft-Glas-Oberflächen (S1, S2) abtastenden, optischen Meßstrahlenbündel (10) in ihrem Durchmesser einstellbar und über die Meßfläche in radialer Richtung verschiebbar sind.

4. Verfahren nach einem der beiden vorhergehenden Ansprüche,
wobei
die Meßstrahlenbündel in den Krümmungsmittelpunkt (M1*) der zu vermessenden Luft-Glas-Oberfläche (S1), gesehen durch die davor liegende, weitere Luft-Glas-Oberfläche (S2), und in den Krümmungsmittelpunkt der als Referenz zu vermessenden Oberfläche (S2) fokussiert werden.

5. Verfahren nach einem der vorhergehenden Ansprüche,
wobei
die Abtastungen mit Laserstrahlenbündeln erfolgen.

6. Verfahren nach einem der vorhergehenden Ansprüche,
wobei
die Linse oder Linsenkombination um eine zumindest annähernd mit ihrer optischen Achse übereinstimmende Drehachse gedreht wird; und
daß das das Meßstrahlenbündel (10) erzeugende System und das das Meßstrahlenbündel empfangende System als modulare Meßeinheit zusammengefaßt werden und diese Meßeinheit senkrecht zur Drehachse verschoben wird.

7. Vorrichtung zum berührungslosen Messen der Topographie einer sphärisch oder asphärisch gekrümmten Luft-Glas-Oberfläche (S1) einer optischen Linse (2) oder eines optischen Linsensystems:
a) mit einer drehbar gelagerten Hohlwelle (1), auf deren Stirnseite die optische Linse (2) oder das Linsensystem derart befestigbar sind, daß die optische Achse der Linse (2) oder des Linsensystems zumindest annähernd mit der Drehachse (3) der Hohlwelle (1) fluchtet;
b) mit einer Fokussieroptik (6) für ein optisches Meßstrahlenbündel (10), die in der Hohlwelle (1) angeordnet ist,
c) wobei die Fokussieroptik (6) derart ausgebildet ist, daß die zu vermessende Luft-Glas-Oberfläche (S1) durch eine in Meßrichtung davor liegende, weitere Luft-Glas-Oberfläche (S2) hindurch mit dem optischen Meßstrahlenbündel (10) abgetastet werden kann;
d) mit Mitteln zum Bestimmen eines Abstands zu einer fixierten Vorderfläche eines zur Vorrichtung gehörenden optischen Meßkopfes für jeden angefahrenen Meßpunkt auf der zu vermessenden Luft-Glas-Oberfläche (S1) mittels des Meßstrahlenbündels (10),
e) wobei die Mittel zum Bestimmen eines Abstands ein Mehrwellenlängen-Interferometer (12) sind; und
f) mit Mitteln zum sequentiellen Durchführen der Abstandsbestimmung für die angefahrenen Meßpunkte der gesamten zu vermessenden Luft-Glas-Oberfläche (S1).

8. Vorrichtung nach Anspruch 7,
wobei
zur Erzeugung des Meßstrahlenbündels (10) ein Laser (8) als Teil der Vorrichtung vorhanden ist.

9. Vorrichtung nach Anspruch 7,
wobei
die Fokussieroptik (6) als Zoom-Optik ausgebildet ist.

## Claims

1. A method for zero-contact measurement of the topography of a spherically or aspherically curved air-glass surface (S1) of an optical lens (2) or of an optical lens system, comprising the following steps:
a) the optical lens (2) or the lens system is fastened on the end side of a rotatably mounted hollow shaft (1) such that the optical axis of the lens (2) or lens system is at least approximately aligned with the rotation axis (3) of the hollow shaft (1);
b) focusing optics (6) for an optical measurement beam (10) are arranged inside the hollow shaft (1);
c) the air-glass surface (S1) to be measured is sampled with the optical measurement beam (10) through an additional air-glass surface (S2) lying before it in the measurement direction;
d) for each approached measurement point on the surface to be measured, a distance from a fixed front surface of an optical measurement head is determined by means of the measurement beam (10),
e) wherein the distance is determined by means of a multiwavelength interferometer (12); and
f) the distance determination is carried out sequentially for the approached measurement points of the entire air-glass surface to be measured.

2. The method as claimed in the preceding claim,
wherein
the additional air-glass surface (S2) lying in front of the sampled air-glass surface (S1) is simultaneously sampled with an optical reference measurement beam distinguishable from the measurement beam (10).

3. The method as claimed in the preceding claim,
wherein
the optical measurement beams (10) sampling both air-glass surfaces (S1, S2) can be adjusted in their diameter and displaced over the measurement surface in the radial direction.

4. The method as claimed in one of the two preceding claims,
wherein
the measurement beams are focused at the center of curvature (M1*) of the air-glass surface (S1) to be measured, as seen through the additional air-glass surface (S2) lying before it, and at the center of curvature of the surface (S2), which is to be measured as a reference.

5. The method as claimed in one of the preceding claims,
wherein
the sampling is carried out using laser beams.

6. The method as claimed in one of the preceding claims,
wherein
the lens or lens combination is rotated about a rotation axis at least approximately coinciding with its optical axis; and
the system generating the measurement beam (10) and the system receiving the measurement beam are combined as a modular measurement unit and this measurement unit is displaced perpendicularly to the rotation axis.

7. A device for zero-contact measurement of the topography of a spherically or aspherically curved air-glass surface (S1) of an optical lens (2) or of an optical lens system:
a) having a rotatably mounted hollow shaft (1), on the end side of which the optical lens (2) or the lens system is fastenable such that the optical axis of the lens (2) or lens system is at least approximately aligned with the rotation axis (3) of the hollow shaft (1);
b) having focusing optics (6) for an optical measurement beam (10), which are arranged inside the hollow shaft (1),
c) wherein the focusing optics (6) are formed such that the air-glass surface (S1) to be measured can be sampled with the optical measurement beam (10) through an additional air-glass surface (S2) lying before it in the measurement direction;
d) having means for determining a distance from a fixed front surface of an optical measurement head belonging to the device for each approached measurement point on the air-glass surface (S1) to be measured by means of the measurement beam (10),
e) wherein the means for determining a distance are a multiwavelength interferometer (12); and
f) having means for sequentially carrying out the distance determination for the approached measurement points of the entire air-glass surface (S1) to be measured.

8. The device as claimed in claim 7,
wherein
a laser (8) is provided as part of the device, for generating the measurement beam (10).

9. The device as claimed in claim 7,
wherein
the focusing optics (6) are formed as zoom optics.

## Revendications

1. Procédé permettant une mesure sans contact de la topographie d'une surface air-verre (S1) à courbure sphérique ou asphérique d'une lentille optique (2) ou d'un système de lentilles optiques, comportant les étapes suivantes :
a) la lentille optique (2) ou le système de lentilles sont fixés sur la face frontale d'un arbre creux (1) monté rotatif, de telle sorte que l'axe optique de la lentille (2) ou du système de lentilles est aligné au moins approximativement avec l'axe de rotation (3) de l'arbre creux (1) ;
b) une optique de focalisation (6) pour un faisceau de rayons de mesure optique (10) est mise en place dans l'arbre creux (1) ;
c) la surface air-verre (S1) à mesurer est explorée à travers une surface air-verre (S2) supplémentaire, disposée en amont de cette dernière dans la direction de mesure, par le faisceau de rayons de mesure optique (10) ;
d) pour chaque point de mesure abordé sur la surface à mesurer est déterminée, au moyen du faisceau de rayons de mesure optique (10), une distance par rapport à une face avant immobilisée d'une tête de mesure optique ;
e) la distance étant déterminée au moyen d'un interféromètre (12) à plusieurs longueurs d'ondes ; et
f) la détermination de la distance est effectuée de manière séquentielle pour les points de mesure abordés de la totalité de la surface air-verre à mesurer.

2. Procédé selon la revendication précédente, dans lequel la surface air-verre (S2) supplémentaire, disposée en amont de la surface air-verre (S1) explorée, est explorée simultanément avec un faisceau de rayons de mesure de référence optique différenciable du faisceau de rayons de mesure optique (10).

3. Procédé selon la revendication précédente, dans lequel les faisceaux de rayons de mesure optiques (10), explorant les deux surfaces air-verre (S1, S2), sont réglables en leur diamètre et sont déplaçables dans le sens radial au-dessus de la surface à mesurer.

4. Procédé selon l'une quelconque des deux revendications précédentes, dans lequel les faisceaux de rayons de mesure optiques sont focalisés dans le centre de courbure (M1*) de la surface air-verre (S1) à mesurer, vue à travers la surface air-verre (S2) supplémentaire disposée en amont de cette dernière, et dans le centre de courbure de la surface (S2) à mesurer en tant que référence.

5. Procédé selon l'une quelconque des revendications précédentes, dans lequel les explorations sont effectuées au moyen de faisceaux de rayons laser.

6. Procédé selon l'une quelconque des revendications précédentes,
dans lequel la lentille ou la combinaison de lentilles est amenée à tourner autour d'un axe de rotation coïncidant au moins approximativement avec leur axe optique ; et
dans lequel le système produisant le faisceau de rayons de mesure optique (10) et le système recevant le faisceau de rayons de mesure optique sont regroupés sous forme d'unité de mesure modulaire et ladite unité de mesure est déplacée perpendiculairement à l'axe de rotation.

7. Dispositif permettant une mesure sans contact de la topographie d'une surface air-verre (S1) à courbure sphérique ou asphérique d'une lentille optique (2) ou d'un système de lentilles optiques,
a) comportant un arbre creux (1) monté rotatif, sur la face frontale duquel peuvent être fixés la lentille (2) ou le système de lentilles, de telle sorte que l'axe optique de la lentille (2) ou du système de lentilles est aligné au moins approximativement avec l'axe de rotation (3) de l'arbre creux (1) ;
b) comportant une optique de focalisation (6) pour un faisceau de rayons de mesure optique (10), laquelle est disposée dans l'arbre creux (1) ;
c) l'optique de focalisation (6) étant configurée de telle sorte que la surface air-verre (S1) à mesurer peut être explorée à travers une surface air-verre (S2) supplémentaire, disposée en amont de cette dernière dans la direction de mesure, par le faisceau de rayons de mesure optique (10) ;
d) comportant des moyens pour déterminer une distance entre une face avant immobilisée d'une tête de mesure optique, faisant partie dudit dispositif, et chaque point de mesure abordé sur la surface air-verre (S1) à mesurer au moyen du faisceau de rayons de mesure optique (10) ;
e) lesdits moyens pour déterminer une distance étant un interféromètre (12) à plusieurs longueurs d'ondes ; et
f) comportant des moyens pour la mise en oeuvre séquentielle du calcul de la distance pour les points de mesure abordés de la totalité de la surface air-verre (S1) à mesurer.

8. Dispositif selon la revendication 7, dans lequel pour produire le faisceau de rayons de mesure optique (10), il est prévu un laser (8) constituant une partie dudit dispositif.

9. Dispositif selon la revendication 7, dans lequel l'optique de focalisation (6) est réalisée sous la forme d'une optique zoom.
